# EUROPÄISCHE PATENTSCHRIFT

(11) **EP 2 180 269 B1**
(45) Veröffentlichungstag und Bekanntmachung des Hinweises auf die Patenterteilung: **18.05.2016**
(21) Anmeldenummer: 09013497.4
(22) Anmeldetag: 26.10.2009
(51) Int. Cl.: F24F 7/013, F24F 12/00

(54) **Hybride Raumlüftungsvorrichtung**
Hybrid room ventilation device
Dispositif d'aération de pièce hybride

(30) Priorität: 27.10.2008 DE 202008014287 U
(43) Veröffentlichungstag der Anmeldung: 28.04.2010
(73) Patentinhaber: Wildeboer, Werner, 26826 Weener (DE)
(72) Erfinder: Wildeboer, Jürgen, Dr.-Ing., 26826 Weener (DE); Harms, Thomas, Dipl.-Ing., 26605 Aurich (DE); Wilms, Hermann, Dipl.-Ing. (FH), 26789 Leer (DE)
(74) Vertreter: Ter Meer Steinmeister & Partner

(56) Entgegenhaltungen:
- EP-A- 1 076 211
- EP-A- 1 918 656
- CH-A5- 693 997
- DE-A1- 10 323 686
- DE-A1-102006 007 814
- DE-U1-202007 016 687
- US-A- 5 226 256

## Beschreibung

Die Erfindung betrifft eine hybride Raumlüftungsvorrichtung mit mindestens einem in einer Außenwand des Raumes angeordneten passiven Lüftungsorgan, mindestens einem aktiven Lüftungsorgan, und einer Steuereinrichtung zur Ansteuerung sowohl der passiven wie auch der aktiven Lüftungsorgane.

Bei einem passiven Raumlüftungssystem erfolgt die Belüftung des Raumes über geöffnete Fenster oder vergleichbare Lüftungsklappen, ohne daß die Zuluft oder die Abluft aktiv gefördert würde. Der Luftaustausch erfolgt dann im wesentlichen konvektiv oder turbulent durch Windeinfluß. Bei einem aktiven Lüftungssystem wird dagegen Außenluft aktiv angesaugt und - zumeist temperiert - in den Raum abgegeben, während Abluft aus dem Raum abgesaugt und nach außen abgegeben wird. Typischerweise erfolgt bisher die aktive Raumlüftung über eine zentrale Klimaanlage, die über verschiedene Leitungen mit den einzelnen Räumen eines Gebäudes verbunden ist.

In Gebäuden, die mit einer Klimaanlage ausgerüstet sind, lassen sich vielfach die Fenster nicht öffnen oder die Klimaanlage wird beim Öffnen der Fenster abgeschaltet, da die über geöffnete Fenster einströmende Luft zu schwer kontrollierbaren Störungen im Regelsystem der Klimaanlage führen würde.

Andererseits sind hybride Lüftungssysteme bekannt, in denen sowohl passive wie auch aktive Lüftungsorgane vorhanden sind, die durch eine gemeinsame Steuereinrichtung gesteuert werden. Im Fall der passiven Lüftungsorgane (Fenster) erfordert dies, daß motorische Antriebe zum Öffnen und Schließen vorhanden sind.

Der Vorteil eines solchen hybriden Systems besteht darin, daß bei moderaten Außentemperaturen und Winddrücken eine passive Lüftung (Fensterlüftung) durchgeführt werden kann und somit Energie für den Betrieb der aktiven Lüftungsorgane eingespart werden kann. Wenn dagegen die Außentemperaturen zu hoch oder zu niedrig und damit für eine passive Lüftung ungeeignet sind, werden die Fenster automatisch geschlossen, und es werden statt dessen die aktiven Lüftungsorgane in Betrieb genommen, um den Raum zu klimatisieren.

Aus EP-A-1 918 656 ist eine Raumlüftungsvorrichtung der eingangs genannten Art bekannt, bei der zwischen aktiver und passiver Lüftung umgeschaltet werden kann.

Es sind auch Außenwandgeräte bekannt geworden, die eine dezentrale aktive Raumbelüftung ermöglichen. In jedem Raum ist dann mindestens ein Außenwandgerät in die Außenwand eingebaut, und die Zuluft wird unmittelbar durch die Außenwand hindurch von außen angesaugt und temperiert in den Raum abgegeben, während Abluft aus dem Raum abgesaugt und durch die Außenwand hindurch nach außen abgegeben wird. Ebenso sind Systeme mit dezentraler Zuluftzufuhr (ggf. auch über Fenster) und zentraler Abluftanlage bekannt.

EP-A-1 076 211 beschreibt eine Vorrichtung zur Rauchfreihaltung von Rettungwegen in Gebäuden, mit einem unten im Treppenhaus angeordneten Außenwandgerät zum Ansaugen von rauchfreier Umgebungsluft und mit einer im Dach angeordneten Lüftungsklappe, über die die rauchbelastete Luft nach außen abgegeben wird. Damit offenbart EP-A-1076211 eine Vorrichtung gemäß dem Oberbegrift von Anspruch 1 und Anspruch 3. DE 20 2007 016 687 U1 und Us-A-5 226 256 beschreiben Raumlüftungssysteme, bei denen das Öffnen und Schließen von Fenstern automatisch gesteuert wird.

CH 693 997 A5 beschreibt ein Raumlüftungssystem mit einer Entlüftungsanlage zur Bewirkung eines Unterdruckes im Gebäudeinneren und mit vom Abluftauslass entfernten Zuluftöffnungen in der Form von Außenwandgeräten, die ein Schließelement und ein Wärmetauscherelement aufweisen.

Aufgabe der Erfindung ist es, eine hybride Raumlüftungsvorrichtung zu schaffen, die eine effiziente Raumbelüftung bei minimiertem Energieeinsatz und ohne Beeinträchtigung der Behaglichkeit ermöglicht.

Diese Aufgabe wird bei einer Ausführungsform der Erfindung.

Dadurch, daß erfindungsgemäß die aktiven und passiven Lüftungsorgane in jedem Raum in bzw. an derselben Außenwand angeordnet sind, erlaubt es die Erfindung, Wechselwirkungen zwischen der aktiven und der passiven Lüftung herbeizuführen und unter bestimmten Bedingungen gezielt nutzbar zu machen.

Insbesondere erlaubt es die Erfindung, den Bereich der Außentemperaturen, in denen eine energiesparende Fensterlüftung durchgeführt werden kann, zu tieferen Außentemperaturen hin zu erweitern. Bei einer herkömmlichen, reinen Fensterlüftung wird bei sinkenden Außentemperaturen relativ bald der Punkt erreicht, an dem Behaglichkeitskriterien verletzt werden, weil die durch die Fenster in den Raum einströmende Luft zu kalt ist. Das erfindungsgemäße System ist hingegen so angeordnet und läßt sich so betreiben, daß sich die aktiv und passiv zugeführten Frischluftströme mischen können, so daß es zu einem gewissen Temperaturausgleich kommt und die Zuluft nicht mehr als unbehaglich empfunden wird. So braucht bei niedrigeren Außentemperaturen durch eine Raumlüftungsvorrichtung mit dem Merkmalen von Anspruch 1 gelöst. nicht völlig auf die Fensterlüftung verzichtet zu werden, sondern es genügt, die aktiven Lüftungsorgane zuzuschalten, wobei diese mit relativ geringer Leistung betrieben werden können, so daß insgesamt immer noch eine Energieersparnis gegenüber einer rein mechanischen Lüftung erreicht wird.

Eine andere Ausführungsform der Erfindung ist in Anspruch 3 definiert.

In dieser anderen Ausführungsform der Erfindung sind die passiven Lüftungsorgane nicht motorisch, sondern von Hand zu öffnen und zu schließen. In diesem Fall ist die Steuereinrichtung mit einer Sensorik zur Erfassung des Zustands der passiven Lüftungsorgane und mit Ausgabeeinrichtung verbunden, über die Handlungsempfehlungen an den Benutzer ausgegeben werden können, beispielsweise Empfehlungen von der Art: "Ein Fenster öffnen", "Alle Fenster öffnen", "Ein Fenster schließen", etc.. Die Empfehlungen können in symbolischer Form oder in Klarschrift über eine Leuchtanzeige oder ein Display wie einen LCD-Bildschirm oder dergleichen ausgegeben werden. Zusätzlich oder alternativ ist auch eine akustische Ausgabe möglich, beispielsweise in der Form von gesprochenen Anweisungen oder zumindest in der Form eines akustischen Signals, das den Benutzer auf die auf dem Display angezeigte Anweisung hinweist.

Diese Ausführungsform erlaubt insbesondere auch eine Nachrüstung von bereits bestehenden Gebäuden, ohne daß motorisch angetriebene Fensterschließer eingebaut werden müssen.

Vorteilhafte Ausgestaltungen des erfindungsgemäßen Gerätes sind in den Unteransprüchen angegeben.

Bevorzugt ist das Außenwandgerät so ausgelegt oder zumindest so steuerbar, daß es druckneutral arbeitet, das heißt, daß die Zuluft- und Abluftströme sich die Waage halten und nicht zu einer Änderung des Rauminnendruckes führen. Das ist besonders in Kombination mit der Fensterlüftung vorteilhaft, da dann die natürliche Lüftungfunktion der Fenster nicht durch ein zusätzliches Druckgefälle gestört wird.

In einer vorteilhaften Ausführungsform ist das Außenwandgerät so ausgelegt, daß es auch im Umluftbetrieb oder zumindest mit einem gewissen Umluftanteil arbeiten kann. In dem Fall kann die Temperierung der aktiv zugeführten Frischluft ganz oder teilweise durch das Zumischen von Umluft erfolgen. Im folgenden wird ein Ausführungsbeispiel anhand der Zeichnung näher erläutert.

Es zeigen:
- Fig. 1: eine Innenansicht eines Teils einer Fensterfront eines Raumes mit einem dezentralen, hybriden Lüftungssystem, das mehrere Außenwandgeräte umfaßt;
- Fig. 2: eine Ansicht einer Adapterplatte für den Einbau eines Außenwandgerätes in die Fensterfront nach Fig. 1;
- Fig. 3: einen Schnitt durch die Adapterplatte längs der Linie III-III in Fig. 2;
- Fig. 4: wesentliche Teile des Außenwandgerätes;
- Fig. 5: einen schematischen Schnitt durch das Außenwandgerät längs der Linie V-V in Fig. 4;
- Fig. 6: eine Ansicht des Außenwandgerätes nach Fig. 4 in einem teilweise montierten Zustand;
- Fig. 7: eine Ansicht des Außenwandgerätes im vollständig montierten Zustand; und
- Fig. 8: eine schematische Seitenansicht einer Raumlüftungsvorrichtung gemäß einem anderen Ausführungsbeispiel.

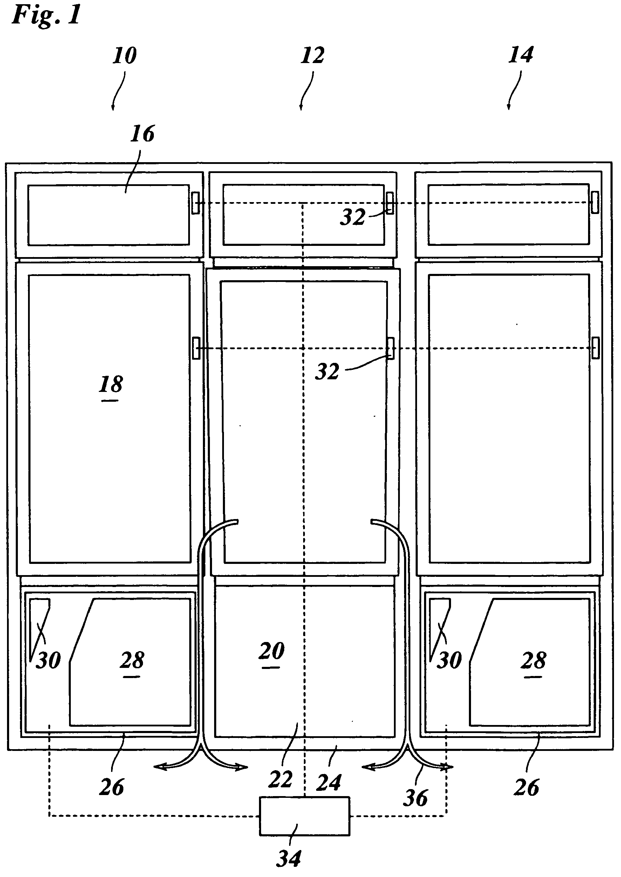

Fig. 1 zeigt eine Fensterfront mit drei sogenannten Achsen 10, 12 und 14, die jeweils durch ein Oberlicht 16, ein Kippfenster 18 und ein Brüstungsfeld 20 gebildet werden. Bei der Achse 12 besteht das Brüstungsfeld 20 aus einer Glasscheibe 22, die fest in einen starren Profilrahmen 24 eingesetzt ist. Bei den Achsen 10 und 14 werden die Brüstungsfelder hingegen von Außenwandgeräten 26 einer dezentralen Lüftungsanlage eingenommen.

Im gezeigten Beispiel weist jedes Außenwandgerät 26 auf der dem Rauminneren zugewandten Innenseite eine verhältnismäßig großflächige Auslaßöffnung 28 und in einer oberen Ecke eine etwas kleinere Ansaugöffnung 30 auf. Durch die Auslaßöffnung 28 wird Außenluft, die von dem Gerät angesaugt und erforderlichenfalls geeignet temperiert wurde, verteilt auf einer relativ großen Fläche und mit entsprechend niedriger Strömungsgeschwindigkeit nach Art einer sogenannten Quell-Lüftung als Zuluft in den Raum abgegeben. Durch die Ansaugöffnung 30 wird verbrauchte Raumluft als Abluft abgesaugt, die dann direkt durch die Fensterfront hindurch als Fortluft nach außen abgeführt wird.

Die Oberlichter 16 und die Kippfenster 18 weisen motorbetätigte Kippbeschläge 32 auf, mit denen sie sich jeweils in eine geöffnete Stellung kippen lassen, wie hier für das Kippfenster in der mittleren Achse 12 dargestellt ist. Die Außenwandgeräte 26 und die Antriebe sämtlicher Kippbeschläge 32 sind an eine gemeinsame elektronische Steuereinrichtung 34 angeschlossen, die verschiedene nicht gezeigte Raumfühler enthält oder mit solchen verbunden ist, so daß die Temperatur und ggf. auch der Feuchtigkeitsgehalt und/oder der Schadstoffgehalt der Luft (z.B. der CO₂-Gehalt) innerhalb des Raumes, vorzugsweise an mehreren Meßpunkten, gemessen werden kann. Vorzugsweise sind auch Außenfühler zur Messung der Außentemperatur und des Winddruckes vorgesehen. In Abhängigkeit von den so erhaltenen Meßwerten werden dann durch die Steuereinrichtung 34 die Kippbeschläge 32 und die Außenwandgeräte 26 so angesteuert, daß unter den jeweils gegebenen Bedingungen mit einem Minimum an Energieeinsatz und unter Beachtung der Kriterien für Behaglichkeit und Raumluftqualität ein optimales Lüftungsergebnis erzielt wird. Der Kippwinkel der Fenster kann dabei in Abhängigkeit von der Außentemperatur und dem Winddruck stufenlos variiert werden.

Wenn die Außentemperatur und der Winddruck nicht zu niedrig und nicht zu hoch sind und die Luft im Inneren des Raumes nicht zu stark belastet ist, bleiben die Außenwandgeräte 26 abgeschaltet und es wird lediglich eine Fensterlüftung durchgeführt, indem alle oder einige der Oberlichter und Kippfenster in eine geöffnete Stellung gekippt werden. Bei für die Fensterlüftung ungeeigneten, z. B. sehr niedrigen Außentemperaturen oder Winddrücken werden die Kippfenster und die Oberlichter geschlossen, und die Belüftung erfolgt ausschließlich über die Außenwandgeräte 26, erforderlichenfalls mit temperierter Luft.

Eine Besonderheit des hier vorgeschlagenen Systems besteht darin, daß die Steuereinrichtung 34 auch einen Betriebsmodus aufweist, in dem die Fensterlüftung mit der aktiven Lüftung mit Hilfe der Außenwandgeräte 26 kombiniert wird.

Wenn ein Fenster in eine Öffnungsstellung gekippt wird, wie beispielsweise das mittlere Kippfenster in Fig. 1, so wird bei niedrigen Außentemperaturen warme Luft aus dem Inneren des Raumes vornehmlich an der Oberkante des Fensters nach außen austreten. Kalte Außenluft wird dagegen an den keilförmigen seitlichen Fensteröffnungen eintreten und auf den Boden des Raumes absinken und sich dort verteilen, wie in Fig. 1 durch Pfeile 36 symbolisiert wird. Die auf diese Weise zugeführte Frischluft wird sich im Wärmeaustausch mit dem Fußboden und anderen Objekten oder Personen innerhalb des Raumes nach und nach erwärmen, mit Raumluft vermischt, und deshalb langsam aufsteigen und schließlich durch den oberen Rand der Fensteröffnung hindurch wieder abgeführt werden, so daß ein Luftaustausch durch natürliche Konvektion erreicht wird.

Wenn nun die Außentemperatur abnimmt, so erhöht sich zum einen die Geschwindigkeit des Luftaustausches, und zum anderen wird die eintretende Luft (Pfeile 36) kälter, mit der Folge, daß im Inneren des Raumes unangenehme kalte Zugluft auftreten kann und die Insassen den Raum als fußkalt empfinden. Unter diesen Bedingungen hält die Steuereinrichtung 34 die Fensterlüftung jedoch - ggf. unter Anpassung des Kippwinkels - weiterhin aufrecht, und sie schaltet lediglich die Außenwandgeräte 26 zu, so daß durch die Auslaßöffnungen 28 zusätzliche temperierte (erwärmte) Luft in den Raum abgegeben wird und zwar ebenfalls in Bodennähe, so daß sie sich auch mit der durch die Fenster eintretenden kälteren Luft vermischt. Dabei können die Außenwandgeräte 26 so betrieben werden, daß der Luftdurchsatz verhältnismäßig gering ist, da ein maßgeblicher Teil der Frischluft nach wie vor durch die Fensterlüftung zugeführt wird. Auf diese Weise kann auch noch bei niedrigeren Außentemperaturen eine ausreichende Lüftung des Raumes mit einem Minimum an Energieeinsatz sichergestellt werden.

Erst wenn die Außentemperaturen auf extrem niedrige Werte absinken, werden durch die Steuereinrichtung 34 automatisch die Kippfenster und Oberlichter geschlossen, und die Belüftung erfolgt ausschließlich mit Hilfe der Außenwandgeräte 26, die dann mit höherem Luftdurchsatz betrieben werden.

Im gezeigten Ausführungsbeispiel ist nur in jeder zweiten Achse der Fensterfront ein Außenwandgerät 26 vorgesehen. In einer anderen Ausführungsform kann ein Außenwandgerät in jeder Achse vorgesehen sein. Ebenso ist es möglich, daß die Fensterfront anstelle der einzelnen Brüstungsfelder 20 ein durchgehendes Lüftungsband aufweist, in das mehrere Außenwandgeräte integriert sind.

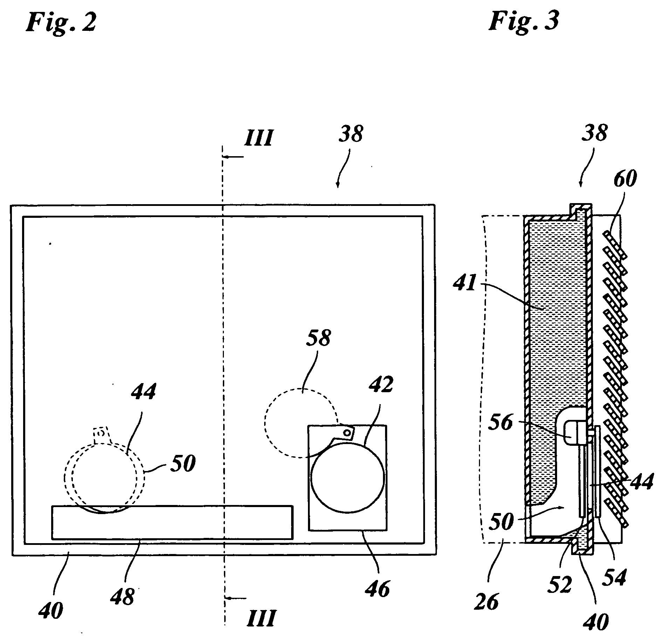

Bei den Achsen 10 und 14 in Fig. 1 ist anstelle der in der Achse 12 erkennbaren Glasscheibe 22 in den Profilrahmen 24 des Brüstungsfeldes 20 eine Adapterplatte 38 eingesetzt, wie sie in Fig. 2 und 3 gezeigt ist. Das Außenwandgerät 26 ist an diese Adapterplatte angebaut und wird durch sie gehalten, wie insbesondere Fig. 3 zeigt.

Fig. 2 zeigt einen Blick auf die Innenseite der Adapterplatte 38 bei abgenommenem Außenwandgerät. Wie dort zu erkennen ist, weist die Adapterplatte einen umlaufenden Rand 40 auf, der in seiner Dicke und Querschnittsform dem Rand einer üblichen mehrfachverglasten Fensterscheibe wie etwa der Scheibe 22 entspricht und es somit erlaubt, die Adapterplatte 38 wie eine gewöhnliche Fensterscheibe in den Profilrahmen 24 (Fig. 1) einzusetzen.

In ihrem dickeren zentralen Teil ist die Adapterplatte 38 als Hohlkörper ausgebildet, der größtenteils mit einem wärmedämmenden Material 41 ausgefüllt ist (Fig. 3). In der äußeren, also der Gebäudeaußenseite zugekehrten Wand dieses Hohlkörpers sind zwei kreisförmige Öffnungen gebildet, nämlich eine Außenluftöffnung 42 und eine Fortluftöffnung 44. Jede dieser Öffnungen ist über einen in der Wärmedämmung ausgesparten Kanal mit einem rechteckigen Durchlaß 46 bzw. 48 der Innenwand der Adapterplatte verbunden. Über diese Durchlässe kommuniziert das direkt an die Adapterplatte angebaute Außenwandgerät 26 mit den Außenluft- und Fortluftöffnungen 42, 44.

Die Fortluftöffnung 44 ist durch eine Fortluftklappe 50 verschließbar, die, wie Fig. 3 zeigt, zwei parallele Klappenblätter 52 und 54 aufweist, von denen sich eines auf der Innenseite und das andere auf der Außenseite der Fortluftöffnung 44 befindet. Beide Klappenblätter 52, 54 sind durch einen elektromotorischen Antrieb 56 gemeinsam in die geöffnete Stellung schwenkbar. Der Antrieb 56 ist als Federrücklaufantrieb ausgebildet, so daß die Fortluftklappe 50 im stromlosen Zustand selbsttätig wieder in die geschlossene Stellung überführt wird.

Wenn beispielsweise bei stürmischer Witterung ein Überdruck auf der Außenseite der Adapterplatte 38 herrscht, so wird das äußere Klappenblatt 54 fest gegen die Außenfläche der Adapterplatte angedrückt. Das Klappenblatt wirkt dann wie ein Rückschlagventil, das die Fortluftöffnung 44 sicher verschließt. Wenn dagegen auf der Außenseite der Adapterplatte ein Unterdruck herrscht. so wird umgekehrt das auf der Innenseite anliegende Klappenblatt 52 gegen die Wand der Adapterplatte angedrückt, so daß auch in diesem Fall die Fortluftöffnung nach Art eines Rückschlagventils sicher verschlossen wird.

An der Außenluftöffnung 42 ist eine Außenluftklappe 58 mit einem entsprechenden Aufbau vorgesehen. Durch den Aufbau dieser Klappen ist sichergestellt, daß die Außenluftöffnung 42 und die Fortluftöffnung 44 witterungsunabhängig sicher in der geschlossenen Stellung gehalten werden können.

Wie Fig. 3 zeigt, ist auf der Außenseite der Adapterplatte 38 in Abstand zu dem dortigen Klappenblatt 54 noch ein Lamellenvorhang 60 vorgesehen, der die Adapterplatte schützt und insbesondere als Abweiser für Niederschlag wirkt.

Die Stromversorgung der Antriebe 56 für die Fortluftklappe 50 und die Außenluftklappe 58 erfolgt vom Außenwandgerät 26 aus. Falls das Außenwandgerät einmal zu Wartungs- oder Reparaturzwecken abgebaut werden muß und somit die Stromversorgung unterbrochen werden muß, sorgen die Federrücklaufantriebe dafür, daß die Zuluft- und Fortluftklappen selbsttätig die geschlossene Stellung einnehmen. Auch bei abgebautem Außenwandgerät bleibt somit die Außenwand oder, spezieller, das Brüstungsfeld 20 in der Fensterfront geschlossen, und es werden ein wirksamer Witterungsschutz sowie eine wirksame Wärmedämmung aufrechterhalten.

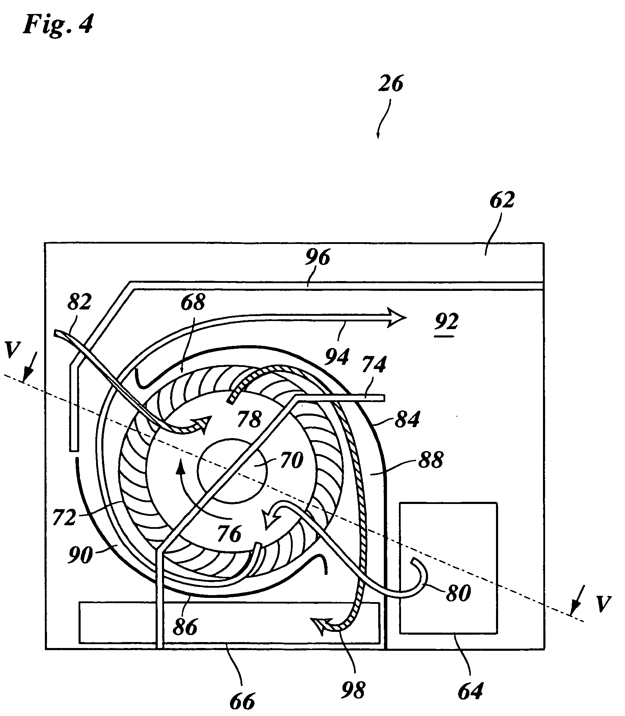

Anhand der Fig. 4 bis 7 soll nun der schichtartige Aufbau des Außenwandgerätes 26 erläutert werden.

In Fig. 4 blickt man auf die Innenseite einer Grundplatte 62, die in ihrer Umrißform dem in Fig. 2 inneren Teil der Adapterplatte 38 ohne den Rand 40 entspricht und mit der das Außenwandgerät 26 zur Adapterplatte hin abgeschlossen und an der Adapterplatte gehalten ist. Durchlässe 64, 66 in der Grundplatte 62 entsprechen in Lage und Kontur den Durchlässen 46 und 48 in Fig. 2.

Auf der Grundplatte 62 ist drehbar ein Lüfterrad 68 montiert. Dieses Lüfterrad hat die Form eines zylindrischen Topfes, der auf der der Grundplatte 62 zugewandten Seite geschlossen ist und im Inneren einen Antriebsmotor 70 aufnimmt, der das Lüfterrad im Uhrzeigersinn in Fig. 4 antreibt. Der zylindrische Mantel des Lüfterrades wird durch einen Schaufelkranz 72 gebildet, dessen Schaufeln eine radial von innen nach außen gerichtete Luftströmung erzeugen. Der Innenraum des Lüfterrades ist von einer den Antriebsmotor 70 übergreifenden Trennwand 74, die mit dem Innenrand des Schaufelkranzes 72 nur einen schmalen (in Fig. 4 nicht sichtbaren) Spalt bildet, in zwei halbkreisförmige Kammern 76, 78 unterteilt. Die Kammer 76 steht mit dem Durchlaß 64 in Strömungsverbindung, wie durch einen in Umrißlinien eingezeichneten Pfeil 80 symbolisiert wird. Die Kammer 78 steht dagegen in Strömungsverbindung mit der Ansaugöffnung 30 (Fig. 1), wie durch einen schraffiert eingezeichneten Pfeil 82 symbolisiert wird.

Das Lüfterrad 68 ist außen von zwei rotationssymmetrisch angeordneten Leitblechen 84, 86 umgeben, die mit dem Außenumfang des Lüfterrades je ein Spiralgehäuse 88 bzw. 90 bilden. Die Trennwand 74, die in Fig. 4 die Spiralgehäuse 88 und 90 zu durchqueren scheint, liegt in diesem Bereich in einer anderen Ebene als die Spiralgehäuse, so daß sie diese nicht versperrt.

Das Lüfterrad 68 fördert Luft aus der Kammer 76 in das Spiralgehäuse 90 und weiter in eine im Inneren des Außenwandgerätes gebildete Zuluftkammer 92, wie durch einen im Umrißlinien dargestellten Pfeil 94 symbolisiert wird. Die Zuluftkammer 92 wird nach oben in Fig. 4 durch eine Trennwand 96 begrenzt.

Weiterhin fördert das Lüfterrad 68 Luft aus der Kammer 78 in das Spiralgehäuse 88 und weiter in den Durchlaß 66, wie durch einen schraffiert eingezeichneten Pfeil 98 symbolisiert wird.

Die Spiralgehäuse 88 und 90 sind gegenüber den jeweils zugehörigen Kammern 76 und 78 um einen bestimmten Winkel in Rotationsrichtung des Lüfterrades verdreht, da die aus der jeweiligen Kammer 76 bzw. 78 angesaugte Luft eine gewisse Zeit benötigt, bis sie den Schaufelkranz 72 durchquert hat und am äußeren Umfang des Lüfterrades austritt. Auf diese Weise wird eine weitgehende Trennung des durch die Pfeile 80 und 94 symbolisierten Luftstromes von dem durch die Pfeile 82 und 98 symbolisierten Luftstrom erreicht.

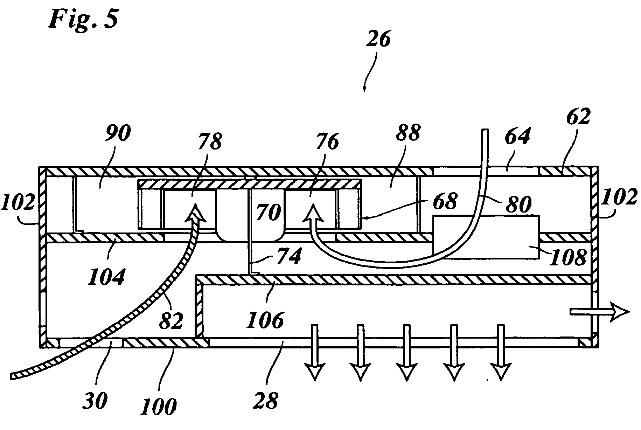

In Fig. 5 ist das Außenwandgerät 26 in einem Schnitt dargestellt. Man erkennt die Grundplatte 62 mit dem Durchlaß 64 sowie eine dieser Grundplatte gegenüberliegende Frontplatte 100, die zusammen mit Seitenwänden 102 und nicht gezeigten oberen und unteren Wänden ein quaderförmiges Gehäuse bildet. Die Frontplatte 100 enthält einen Teil der Auslaßöffnung 28 sowie einen Teil der Ansaugöffnung 30. Weitere Teile der Auslaßöffnung 28 und der Ansaugöffnung 30 liegen in den Seitenwänden 102 und der nicht gezeigten oberen Wand des Gehäuses. Die Spiralgehäuse 88 und 90 sind durch eine zu der Grundplatte 62 parallele Platte 104 abgeschlossen, die jedoch den Zugang zu den Kammern 76 und 78 frei läßt. Man erkannt die durch den Pfeil 80 dargestellte Strömungsverbindung vom Durchlaß 64 zur Kammer 76 und die durch den Pfeil 82 dargestellte Strömungsverbindung von der Ansaugöffnung 30 zur Kammer 78. Die Ansaugöffnung 30 und die Auslaßöffnung 28 sind durch eine Trennwand 106 strömungsmäßig voneinander getrennt.

In die Platte 104 ist ein Filter 108 eingebaut, durch den die vom Durchlaß 64 zur Kammer 76 strömende Luft gefiltert wird.

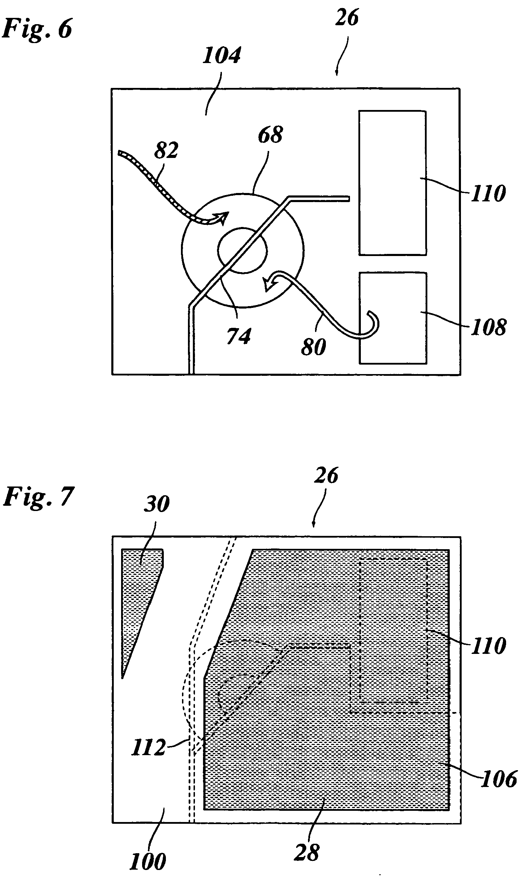

Fig. 6 zeigt einen Blick auf die Platte 104. Man erkennt hier, daß in diese Platte neben dem Filter 108 ein Wärmetauscher 110 eingebaut ist, durch den die Luft, die vom Lüfterrad aus der Kammer 78 in die Zuluftkammer 92 (Fig. 4) gefördert wurde, hindurchtreten muß, bevor sie die Auslaßöffnung 28 erreicht. Diese Luft steht in dem Wärmetauscher 110 in Wärmeaustausch mit einem flüssigen Wärmemedium, z.B. Wasser, das in der kalten Jahreszeit zum Erhitzen der Zuluft und in der warmen Jahreszeit zum Kühlen der Zuluft dienen kann.

Fig. 7 zeigt eine Frontansicht des Außenwandgerätes 26 mit der Auslaßöffnung 28 und der Ansaugöffnung 30. Hinter diesen Öffnungen sind nicht näher gezeigte Einbauten angeordnet, die zur Vergleichmäßigung und Verteilung der Luftströmungen sowie zur Schalldämmung dienen. Die Trennwand 106 sowie eine weitere Trennwand 112 zur Trennung der Auslaßöffnung 28 von der Ansaugöffnung 30 sind gestrichelt eingezeichnet.

Die verbleibenden Hohlräume innerhalb des quaderförmigen Gehäuses des Außenwandgerätes sind mit nicht gezeigten wärme- und schalldämmende Materialien ausgefüllt.

Das oben beschriebene Außenwandgerät arbeitet wie folgt. Im normalen Lüftungsbetrieb sind die Außenluftklappe 58 und die Fortluftklappe 50 geöffnet. und das Lüfterrad 68 wird angetrieben, so daß Außenluft über die Außenluftöffnung 42, die Durchlässe 46 und 64 und den Filter 108 in die Kammer 76 angesaugt wird (Pfeil 80). Durch den Schaufelkranz 72 wird diese Luft in das Spiralgehäuse 90 und weiter durch die Zuluftkammer 92 und den Wärmetauscher 110 zu der Auslaßöffnung 28 gefördert (Pfeil 94) und als Zuluft in den Raum abgegeben. Gleichzeitig wird Abluft aus dem Raum über die Ansaugöffnung 30 in die Kammer 78 des Lüfterrades angesaugt (Pfeil 82) und durch den Schaufelkranz 72 in das Spiralgehäuse 88 und weiter durch die Durchlässe 66 und 48 gefördert und über die Fortluftöffnung 44 zur Gebäudeaußenseite abgegeben (Pfeil 98). Während sich die Schaufeln des Schaufelkranzes 72 durch die Kammer 78 bewegen, nehmen sie Wärme aus der Abluft auf, wobei sie sich selbst erwärmen.

Wenn diese Schaufeln anschließend die Kammer 76 durchqueren, geben sie die Wärme an die angesaugte Zuluft ab, so daß diese vorerwärmt in den Raum eintritt. Auf diese Weise erfüllt das Lüfterrad 68 zugleich die Funktion eines Wärmetauschers, mit dem in der kalten Jahreszeit ein Teil der Wärme aus der Abluft zurückgewonnen werden kann. Entsprechend arbeitet das Lüfterrad 68 in der warmen Jahreszeit als Wärmetauscher, mit dem die Zuluft vorgekühlt wird, bevor sie im Wärmetauscher 110 mit Hilfe des kalten, flüssigen Wärmemediums weiter abgekühlt wird.

Das Lüfterrad 68 und die Trennwand 74 sind so gestaltet und angeordnet, und die Strömungswiderstände der angeschlossenen Strömungskanäle einschließlich der Filter, Wärmetauscher und sonstiger Einbauten sind so abgestimmt, daß, wenn die Außenluft- und Fortluftklappen 58, 50 ganz geöffnet sind, die Volumenströme der Zuluft und der Abluft übereinstimmen, so daß das Gerät druckneutral arbeitet.

Aufgrund unvermeidlicher Leckage im und am Lüfterrad ist jedoch die Trennung zwischen der Zuluftströmung und der Abluftströmung nicht vollständig. Das heißt, ein gewisser Teil der aus dem Raum angesaugten Abluft wird durch das Lüfterrad wieder in das Spiralgehäuse 90 gefördert und gelangt - nach Temperierung im Wärmetauscher 110 - als Umluft wieder in den Raum. Dieser Umluftanteil beträgt in der Praxis etwa 30 % des insgesamt umgewälzten Luftvolumens. Da dieser Umluftanteil den Wärmetauscher 110 passieren muß, trägt er stets zur Klimatisierung des Raumes bei.

Wenn bei extremen Außentemperaturen ein erhöhter Umluftanteil erwünscht ist, brauchen nur die Fortluftklappe 50 und die Außenluftklappe 58 ganz oder teilweise geschlossen zu werden. Bei vollständig geschlossenen Klappen arbeitet das Gerät im reinen Umluftbetrieb.

Das quaderförmige Gehäuse des Außenwandgerätes 26 hat Abmessungen von etwa 100 x 88 cm und läßt sich daher gut in dem Brüstungsfeld 20 der Fensterfront unterbringen, wie in Fig. 1 gezeigt ist. Dabei hat das Gerät eine vergleichsweise geringe Tiefe von etwa 35 cm. Da das Gerät zudem direkt an der anstelle der Glasscheibe in den Profilrahmen 24 eingebauten Adapterplatte 38 montiert ist, ragt das Gerät nur wenig in den Raum, so daß die nutzbare Fläche des Raumes kaum eingeschränkt wird. Die hängende Montage an der Adapterplatte 38 sorgt zudem für Bodenfreiheit, so daß der Boden unter dem Außenwandgerät bequem gereinigt werden kann.

Trotz der kompakten Abmessungen des Gehäuses hat das Lüfterrad einen vergleichsweise großen Durchmesser von etwa 40 cm. Das erlaubt einen vergleichsweise hohen Luftdurchsatz von etwa 460 m³/h bei geringer Geräuschbelastung.

Aufgrund dieses hohen Luftdurchsatzes genügt es in der Regel, wenn nur in jede zweite Achse 10, 14 der Fensterfront (Fig. 1) ein Außenwandgerät eingebaut ist. Dabei versteht es sich, daß in der Praxis die Fensterfront eine bedeutend größere Anzahl von Achsen als drei und entsprechend auch eine größere Anzahl von Außenwandgeräten 26 aufweisen kann.

Im hybriden Lüftungsbetrieb, also bei gleichzeitiger Fensterlüftung und Lüftung mit Hilfe der Außenwandgeräte 26, wird die Temperatur- und Geschwindigkeitsverteilung der in den Raum einströmenden Luft auch davon abhängig sein, welche der Kippfenster 18 geöffnet und welche geschlossen sind. In dem in Fig. 1 illustrierten Fall sind nur die Kippfenster 18 in den Achsen (12) geöffnet, in denen sich keine Außenwandgeräte 26 befinden, was im allgemeinen zu einer guten Durchmischung der über die Kippfenster einströmenden Luft (Pfeile 36) mit der von den Außenwandgeräten abgegebenen Zuluft führt. Daneben ist Jedoch auch eine Betriebsweise denkbar, bei der umgekehrt nur die Kippfenster geöffnet sind, die sich unmittelbar über den Außenwandgeräten befinden (in den Achsen 10 und 14 in Fig. 1), wodurch unter Umständen die Behaglichkeit günstig beeinflußt werden kann. Ebenso ist es denkbar, alle Fenster zu öffnen.

Während im gezeigten Beispiel die Außenwandgeräte 26 als Quell-Lüftungsgeräte ausgelegt sind, bei denen die Zuluft mit geringer Strömungsgeschwindigkeit über eine relativ große Fläche der Auslaßöffnungen 28 abgegeben wird, sind auch modifizierte Ausführungsformen denkbar, bei denen die Auslaßöffnungen 28 und die Ansaugöffnungen 30 anders ausgelegt und angeordnet sind. Beispielsweise können die Auslaßöffnungen 28 für eine Impulslüftung ausgelegt sein, bei der die Luft mit höherer Strömungsgeschwindigkeit auf einer kleineren Fläche und stärker gerichtet in den Raum abgegeben wird. Dabei ist auch eine symmetrische Anordnung denkbar, bei der die Ansaugöffnung 30 sich etwa in der Mitte des Gerätes (oder des oberen Randes desselben) befindet, während sich Auslaßöffnungen 20 auf beiden Seiten befinden. Bei der in Fig. 1 illustrierten Betriebsweise könnte so eine gute Durchmischung der Fensterluft mit der Zuluft des Außenwandgerätes erreicht werden, während die über die Kippfenster einströmende Luft wirksamer von den Ansaugöffnungen 30 ferngehalten wird.

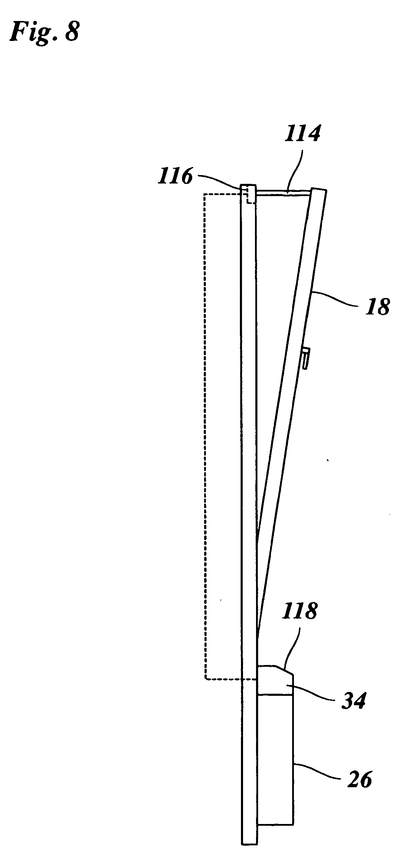

In Fig. 8 ist eine Ausführungsform dargestellt, bei der das Kippfenster 18 einen von Hand zu betätigenden Kippbeschlag 114 aufweist. Dem Kippbeschlag ist ein Sensor 116 zugeordnet, mit dem der geöffnete oder geschlossene Zustand des Fensters erfaßt und an die Steuereinrichtung 34 gemeldet werden können. Wenn die Steuereinrichtung 34 anhand der Signale der Raumfühler und Außenfühler feststellt, daß eine reine Fensterlüftung oder eine Kombination aus Fensterlüftung und aktiver Lüftung zweckmäßig ist, so wird über eine Ausgabeeinrichtung 118, beispielsweise in der Form eines LCD-Displays, die Anweisung ausgegeben: "Fenster öffnen". Zusätzlich kann der Benutzer durch ein akustisches Signal auf diese Anweisung aufmerksam gemacht werden. Wenn der Benutzer daraufhin die Fenster öffnet, wird dies von den Sensoren 116 der betreffenden Fenster erfaßt, und die Steuereinrichtung 34 paßt daraufhin die Betriebsweise des Außenwandgerätes 26 entsprechend an. Auf die gleiche Weise kann über die Ausgabeeinrichtung 118 auch die Anweisung ausgegeben werden, die Fenster zu schließen. Wenn die Fenster zwischen der vollständig geöffneten und der vollständig geschlossenen Stellung mehrere Zwischenstellungen aufweisen, können auch diese Zwischenstellungen durch Sensoren detektiert bzw. identifiziert und durch entsprechende Anweisungen spezifiziert werden. Ebenso ist es bei einer Raumlüftungsvorrichtung, bei der mehrere Fenster einbezogen sind, auch möglich, die Anzahl der zu öffnenden bzw. zu schließenden Fenster anzugeben oder die Jeweils zu öffnenden oder zu schließenden Fenster einzeln zu spezifizieren.

## Patentansprüche

1. Hybride Raumlüftungsvorrichtung mit mindestens einem in einer Außenwand eines Raumes anordnen baren passiven Lüftungsorgan (16, 18), mindestens einem aktiven Lüftungsorgan (26), und einer Steuereinrichtung (34) zur Ansteuerung sowohl der passiven wie auch der aktiven Lüftungsorgane, wobei das mindestens eine passive Lüftungsorgan (16, 18) durch die Steuereinrichtung (34) motorisch zu öffnenden und zu schließen ist, **dadurch gekennzeichnet, daß** das aktive Lüftungsorgan ein Außenwandgerät (26) ist, das unterhalb des passiven Lüftungsorgans (16, 18) an der Außenwand aufstellbar ist und dazu eingerichtet ist, Außenluft durch eine Außenluftöffnung (42) in der Außenwand anzusaugen und als Zuluft temperiert in den Raum abzugeben, und daß die Steuereinrichtung (34) mindestens einen Betriebsmodus aufweist, in dem das aktive Lüftungsorgan Zuluft temperiert in den Raum abgibt und simultan das mindestens eine passive Lüftungsorgan (16, 18) geöffnet ist.

2. Raumlüftungsvorrichtung nach Anspruch 1, bei dem die Steuereinrichtung (34) dazu ausgebildet ist, den Öffnungsgrad des passiven Lüftungsorgans (16, 18) und/oder die Förderleistung des Außenwandgerätes (26) stufenlos zu variieren.

3. Hybride Raumlüftungsvorrichtung mit mindestens einem in einer Außenwand eines Raumes anordnen baren passiven Lüftungsorgan (16, 18), mindestens einem aktiven Lüftungsorgan (26), und einer Steuereinrichtung (34) zur Ansteuerung des aktiven Lüftungsorgans, **dadurch gekennzeichnet, daß** das aktive Lüftungsorgan ein Außenwandgerät (26) ist, das unterhalb des passiven Lüftungsorgans (16, 18) an der Außenwand aufstellbar ist und dazu eingerichtet ist, Außenluft durch eine Außenluftöffnung (42) in der Außenwand anzusaugen und als Zuluft temperiert in den Raum abzugeben, und daß die Steuereinrichtung (34) mit mindestens einem Sensor (116) zur Erfassung des Öffnungszustands des passiven Lüftungsorgans (18) und mit einer Ausgabeeinrichtung (118) zur Ausgabe von Handlungsempfehlungen zum Öffnen oder Schließen des mindestens einen passiven Lüftungsorgans (16, 18) an einen Benutzer verbunden ist und mindestens einen Betriebsmodus aufweist, in dem das aktive Lüftungsorgan Zuluft temperiert in den Raum abgibt und simultan das mindestens eine passive Lüftungsorgan (16, 18) geöffnet ist.

4. Raumbelüftungsvorrichtung nach einem der vorstehenden Ansprüche, bei der das Außenwandgerät (26) für Umluftbetrieb ausgelegt ist.

5. Raumbelüftungsvorrichtung nach einem der vorstehenden Ansprüche, bei der das Außenwandgerät (26) einen Wärmetauscher (110) aufweist, in dem die Zuluft in Wärmeaustausch mit einem flüssigen Wärmemedium gelangt.

6. Raumlüftungsvorrichtung nach einem der vorstehenden Ansprüche, bei dem das Außenwandgerät (26) ein einziges Lüfterrad (68) aufweist, das neben einem in den Raum abgegebenen Zuluftstrom auch einen aus dem Raum abgesaugten und nach außen abgegebenen Abluftstrom erzeugt und dabei einen Wärmeaustausch zwischen Zuluft und Abluft bewirkt.

7. Raumlüftungsvorrichtung nach Anspruch 6, bei dem das Außenwandgerät (26) so gestaltet ist und die Strömungswiderstände der angeschlossenen Strömungskanäle so abgestimmt sind, daß die Volumenströme der Zuluft und der Abluft übereinstimmen, so daß das Gerät druckneutral arbeitet..

## Claims

1. Hybrid room ventilation device comprising: at least one passive ventilation member (16, 18) to be arranged in an external wall of a room, at least one active ventilation member (26), and a control device (24) for controlling both the passive and the active ventilation members, wherein the at least one passive ventilation member (16, 18) is adapted to be motor-driven for opening and closing by the control device (34), **characterized in that** the active ventilation member is an external wall-mounted device (26) to be installed below the passive ventilation member (16, 18) at the external wall and arranged to suck-in external air through an external air opening (42) in the external wall and to discharge the air as temperature-controlled fresh air into the room, and **in that** the control device (34) has at least one mode of operation in which the active ventilation member discharges temperature-controlled fresh air into the room and said at least one passive ventilation member (16, 18) is open simultaneously.

2. Room ventilation device according to claim 1, wherein the control device (34) is arranged to continuously vary the degree of opening of the passive ventilation member (16, 18) and/or the displacement of the external wall-mounted device (26).

3. Hybrid room ventilation device comprising: at least one passive ventilation member (16, 18) to be arranged in an external wall of a room, at least one active ventilation member (26), and a control device (34) for controlling the active ventilation member, **characterized in that** the active ventilation member is an external wall-mounted device (26) arranged to be installed below the passive ventilation member (16, 18) at the external wall and arranged to suck-in external air through an external air opening (42) in the external wall and to discharge the air as temperature-controlled fresh air into the room, and **in that** the control device (34) is connected to at least one sensor (116) for detecting the open/close condition of the passive ventilation member (18) and to an output device (118) for outputting action recommendations for openings and closing said at least one passive ventilation member (16, 18) to a user and has at least one mode of operation in which the active ventilation member discharges temperature-controlled fresh air into the room and said at least one passive ventilation member (16, 18) is open simultaneously.

4. Room ventilation device according to any of the preceding claims, wherein the external wall-mounted device (26) is arranged for recirculating air.

5. Room ventilation device according to any of the preceding claims, wherein the external wall-mounted device (26) has a heat exchanger (110) in which the fresh air comes into heat exchange with a liquid heat transfer medium.

6. Room ventilation device according to any of the preceding claims, wherein the external wall-mounted device (26) has a single impeller (68) which creates, in addition to a stream of fresh air discharged into the room, also a stream of exhaust air withdrawn from the room and discharged to the outside, and which thereby effects a heat exchange between the fresh air and the exhaust air.

7. Room ventilation device according to claim 6, wherein the external wall-mounted device (26) is so designed and the flow resistances of the connected flow passages are so adjusted that the flow volumes of the fresh air and of the exhaust air are equal and the device operates at neutral pressure.

## Revendications

1. Dispositif hybride de ventilation de pièce comportant au moins un organe de ventilation passif (16, 18) pouvant être agencé dans un mur extérieur d'une pièce, au moins un organe de ventilation actif (26) et un dispositif de commande (34) pour la commande aussi bien des organes de ventilation passifs que des organes de ventilation actifs, dans lequel l'ouverture et la fermeture motorisée du au moins un organe de ventilation passif (16, 18) s'effectuent par l'intermédiaire du dispositif de commande (34), **caractérisé en ce que** l'organe de ventilation actif est un appareil mural extérieur (26) qui peut être installé sur le mur extérieur sous l'organe de ventilation passif (16, 18) et est adapté pour aspirer l'air extérieur par une ouverture d'air extérieure (42) dans le mur extérieur et pour le transférer de manière tempérée dans la pièce en tant qu'air entrant, et **en ce que** le dispositif de commande (34) comporte au moins un mode de fonctionnement dans lequel l'organe de ventilation actif transfère l'air entrant de manière tempérée dans la pièce et le au moins un organe de ventilation passif (16, 18) est simultanément ouvert.

2. Dispositif de ventilation de pièce selon la revendication 1, dans lequel le dispositif de commande (34) est configuré de manière à faire varier progressivement le degré d'ouverture de l'organe de ventilation passif (16, 18) et/ou la capacité de refoulement de l'appareil mural extérieur (26).

3. Dispositif hybride de ventilation de pièce comportant au moins un organe de ventilation passif (16, 18) pouvant être agencé dans un mur extérieur d'une pièce, au moins un organe de ventilation actif (26) et un dispositif de commande (34) pour la commande de l'organe de ventilation actif, **caractérisé en ce que** l'organe de ventilation actif est un appareil mural extérieur (26) qui peut être installé sur le mur extérieur sous l'organe de ventilation passif (16, 18) et est adapté pour aspirer l'air extérieur par une ouverture d'air extérieure (42) dans le mur extérieur et pour le transférer de manière tempérée dans la pièce en tant qu'air entrant, et **en ce que** le dispositif de commande (34) est relié à au moins un capteur (116) pour détecter l'état d'ouverture de l'organe de ventilation passif (18) et à un dispositif de sortie (118) pour générer des recommandations d'actions destinées à un utilisateur pour ouvrir ou fermer le au moins un organe de ventilation passif (16, 18), et comporte au moins un mode de fonctionnement dans lequel l'organe de ventilation actif transfère l'air entrant de manière tempérée dans la pièce et le au moins un organe de ventilation passif (16, 18) est simultanément ouvert.

4. Dispositif de ventilation de pièce selon l'une des revendications précédentes, dans lequel l'appareil mural extérieur (26) est conçu pour une circulation d'air.

5. Dispositif de ventilation de pièce selon l'une des revendications précédentes, dans lequel l'appareil mural extérieur (26) comporte un échangeur de chaleur (110) dans lequel l'air entrant est en échange thermique avec un fluide calorifique liquide.

6. Dispositif de ventilation de pièce selon l'une des revendications précédentes, dans lequel l'appareil mural extérieur (26) comporte une roue de ventilateur unique (68) qui génère également, en plus d'un courant d'air entrant rejeté dans la pièce, un courant d'air sortant aspiré à partir de la pièce et rejeté vers l'extérieur, et produit ainsi un échange de chaleur entre l'air entrant et l'air sortant.

7. Dispositif de ventilation de pièce selon la revendication 6, dans lequel l'appareil mural extérieur (26) est conçu et les résistances à l'écoulement des canaux d'écoulement raccordés sont adaptées de telle sorte que les débits volumiques d'air entrant et d'air sortant correspondent de sorte que l'appareil fonctionne à une pression neutre.
